# EUROPÄISCHE PATENTANMELDUNG

(11) **EP 4 116 080 A1**
(43) Veröffentlichungstag der Anmeldung: **11.01.2023**
(21) Anmeldenummer: 22181030.2
(22) Anmeldetag: 24.06.2022
(51) Int. Cl.: B32B 5/02, B32B 11/10, B32B 25/10, B32B 27/12, E04B 1/66, E02D 31/02

(54) **FLÄCHENABDICHTUNGSBAHN**

(30) Priorität: 06.07.2021 DE 202021103635 U
(71) Anmelder: BPA-GmbH, 71083 Herrenberg-Gültstein (DE)
(72) Erfinder: Pflieger, Adrian, 71126 Gäufelden (DE)
(74) Vertreter: Kohler Schmid Möbus Patentanwälte

(57) **Zusammenfassung**

Die Erfindung betrifft eine Flächenabdichtungsbahn (1) zur Abdichtung von wasserundurchlässigen Betonkonstruktionen mit
a) einer ersten Verbundschicht (2), die ein Vlies und/oder ein Gewebe aufweist,
b) einer Dichtungsschicht (4), die eine Dichtungsbahn aufweist, auf der die erste Verbundschicht angeordnet ist,
c) eine zweite Verbundschicht (3), auf der die Dichtungsschicht (4) angeordnet ist, wobei die zweite Verbundschicht (3) ein Vlies, Geogitter, Wirkgelege und/oder Gewebe aufweist.

## Beschreibung

Die Erfindung betrifft eine Flächenabdichtungsbahn zur Abdichtung von wasserundurchlässigen Betonkonstruktionen mit einer ersten Verbundschicht, die ein Vlies und/oder ein Gewebe aufweist und mit einer Dichtungsschicht, die eine Dichtungsbahn aufweist, auf der die erste Verbundschicht angeordnet ist.

Bauwerke werden heute in verstärktem Maß als wasserundurchlässige Betonkonstruktionen ausgebildet. Eine zusätzliche abdichtende Maßnahme bei wasserundurchlässigen Betonkonstruktionen ist die nachträgliche Rissinjektion, da bis heute ein rissfreier Beton nicht hergestellt werden kann. Um die nachträgliche Rissinjektion zu minimieren, werden heute zusätzlich so genannte Frischbetonverbundfolien zur flächigen Abdichtung von wasserundurchlässigen Betonkonstruktionen eingesetzt. Diese Frischbetonverbundfolien gehen einen mechanischen oder chemischen Verbund mit dem Frischbeton ein und erzielen so die Dichtheit der Gesamtkonstruktion.

Die Frischbetonverbundabdichtung mit wahlweise mechanischem Verbund oder adhäsivem chemischen Verbund erhöht die Dichtheit der Betonkonstruktion und verbessert die Betonrandzone durch Aufnahme des Überschusswassers und durch optimale Betonnachbehandlung. Weiterhin werden Betonfehlstellen und geringfügige Störungen überbrückt. So wird die Betonkonstruktion vor eindringendem und zirkulierendem Wasser geschützt. Weiterhin erfolgt ein Schutz vor schädigenden Einflüssen wie Salzen, Chloriden oder Sulfaten.

Häufig ist es jedoch erforderlich, dass die Frischbetonverbundfolien miteinander verbunden werden müssen, um großflächige Abdichtungen zu erreichen. Weiterhin ist es häufig notwendig, dass weitere Schichten an die Rückseite der Frischbetonverbundfolien angebunden werden sollten, was häufig daran scheitert, dass die Rückseite der Frischbetonverbundfolien keine Anbindung von weiteren Schichten erlaubt.

Aufgabe der vorliegenden Erfindung ist es deshalb, eine Flächenabdichtungsbahn bereitzustellen, mit der die oben genannten Nachteile vermieden werden können.

Gelöst wird diese Aufgabe erfindungsgemäß durch eine Flächenabdichtungsbahn zur Abdichtung von wasserundurchlässigen Betonkonstruktionen mit
a) einer ersten Verbundschicht, die ein Vlies oder ein Gewebe aufweist,
b) einer Dichtungsschicht, die eine Dichtungsbahn aufweist, auf der die erste Verbundschicht angeordnet ist,
c) einer zweiten Verbundschicht, auf der die Dichtungsschicht angeordnet ist, wobei die zweite Verbundschicht ein Vlies, Geogitter, Wirkgelege und/oder Gewebe aufweist.

Erfindungsgemäß ist also eine Flächenabdichtungsbahn mit zumindest einem dreischichtigen Aufbau vorgesehen. Da die erste Verbundschicht ein Vlies und/oder ein Gewebe aufweist und die zweite Verbundschicht ein Vlies, Geogitter, Wirkgelege und/oder Gewebe aufweist, ist es möglich, Flächenabdichtungsbahnen untereinander zu verbinden. Insbesondere kann die erste Verbundschicht der einen Flächenabdichtungsbahn mit der zweiten Verbundschicht einer zweiten Flächenabdichtungsbahn verbunden werden. Die Verbindung kann mit handelsüblichen 1K- oder 2K-Klebesystemen erfolgen. Dadurch können absolut dichte und kraftübertragende Stoßverbindungen und Klebeverbindungen hergestellt werden. Dies ist mit herkömmlichen Frischbetonverbundfolien nicht möglich. Dichte bzw. wasserundurchlässige Anschlüsse können somit problemlos hergestellt werden.

Das Vlies oder Gewebe der ersten Verbundschicht kann in Kontakt mit Frischbeton gelangen. Dadurch kann die Betonkonstruktion an der Betonrandzone bewehrt und eine Rissbildung minimiert werden. Auf der dem Frischbeton abgewandten Seite ist die zweite Verbundschicht vorgesehen. Durch die zweite Verbundschicht wird zum einen die Dichtungsschicht geschützt und zum anderen entsteht eine weitere Ankopplungsfläche, die eine vollflächige Verklebung, beispielsweise mit einem Wärmedämmverbundsystem, erlaubt.

Insbesondere ist es mit der erfindungsgemäßen Flächenabdichtungsbahn möglich, einen mechanischen Verbund zum Frischbeton herzustellen und eine dauerhaft hinterlaufsichere Abdichtung zu ermöglichen. Risse werden überbrückt. Dadurch wird jeglicher Flüssigkeits- und Gastransport zwischen der Flächenabdichtungsbahn und der abzudichtenden Betonoberfläche gestoppt.

Die erste Verbundschicht kann alkalibeständigen Fasern aufweisen und/oder daraus hergestellt sein. Insbesondere können das Vlies oder Gewebe aus alkalibeständigen Fasern hergestellt sein. Beispielsweise kann die erste Verbundschicht Kunststofffasern, insbesondere Polypropylen (PP)-Fasern, Polyethylen (PE)-Fasern, Mineralfasern, PE-Gewebe, PP-Gewebe etc. aufweisen. Weiterhin kann die erste Verbundschicht Naturfasern, wie beispielsweise Mineralfasern oder Steinfasern, aufweisen. Diese Fasern können vor der Vlies- oder Gewebeherstellung Kunstfasern zugegeben werden. Weiterhin kann die erste Verbundschicht beispielsweise über hydrophile Klebeschichten verklebt werden.

Die zweite Verbundschicht wirkt außerdem dahingehend, dass eine unerwünschte Längenausdehnung der Dichtungsschicht während der Montage verhindert wird. Sie bietet weiterhin einen wirkungsvollen Schutz bei Hinterfüllungen und außerdem eine weitere Ankopplungs- bzw. Verbundfläche für den weiteren Schichtaufbau. Beispielsweise können Wärmedämmverbundsysteme mit der zweiten Verbundschicht verklebt werden. Weiterhin können an der zweiten Verbundschicht der Flächenabdichtungsbahn mineralische Abdichtungen, bituminöse Spritzabdichtungen, Polyurea, Flüssigkunststoffe und sonstige spritz-, walzbare Flächenabdichtungen angebracht werden. Auch Spritzmörtel und Spritzbeton kann auf die zweite Verbundschicht aufgebracht und kraftschlüssig angekoppelt werden.

Die Flächenabdichtungsbahn kann streifenförmig ausgebildet sein. Dadurch ist es möglich, die Flächenabdichtungsbahn aufzurollen und platzsparend zu transportieren. Außerdem wird die Verarbeitung der Flächenabdichtungsbahn dadurch erleichtert. Mehrere Flächenabdichtungsbahnen können parallel zueinander ausgelegt und miteinander verklebt werden.

Besondere Vorteile ergeben sich, wenn die Dichtungsschicht als Kunststoffdichtungsbahn, Bitumenbahn oder Ethylen-Propylen-Dien-(Monomer)-Kautschuk(EPDM)-Bahn ausgebildet ist. Mit einer derart ausgestalteten Dichtungsschicht kann eine besonders gute Abdichtung und Dichtungswirkung erreicht werden.

Dabei kann die Dichtungsschicht eine Dicke von mindestens 0,8 mm, vorzugsweise von mindestens 1,2 mm aufweisen, wenn sie als Kunststoffdichtungsbahn ausgebildet ist, von mindestens 0,5 mm, vorzugsweise von mindestens 0,7 mm aufweisen, wenn Sie als EPDM-Bahn ausgebildet ist und eine Dicke von mindestens 2 mm, vorzugsweise von mindestens 3 mm aufweisen, wenn sie aus Bitumen ausgebildet ist.

Die Kunststoffdichtungsbahn kann aus Polyvinylchlorid (PVC), thermoplastischem Polymer (TPO), flexiblen Polyolefinen (FPO), Polypropylen (PP-Flex), hochdichtem Polyethylen (HDPE) oder thermoplastischem Elastomer (TPE) ausgebildet sein.

Die zweite Verbundschicht kann einen Naturfaserzusatz, insbesondere einen Mineralfaserzusatz oder Steinfaserzusatz, aufweisen. Dadurch kann mit der zweiten Verbundschicht eine besonders gute Verbindung zu Beton hergestellt werden.

Die zweite Verbundschicht kann ein PP-Vlies aufweisen. Dies ist besonders geeignet, um einen innigen Verbund mit jedem weiteren Aufbau einzugehen, beispielsweise Spritzbeton, Spritzmörtel, Dichtungsschlämme, bituminösen Abdichtungsmaterialien, mineralischen Dichtungsschlämmen, Vollwärmeschutz, Flüssigfolienübergängen, Polyurea, etc.

Weiterhin kann die zweite Verbundschicht liquide Dispersion-Polymere (LDP) und/oder Superabsorber-Polymere (SAP) aufweisen. Dadurch kann ein mechanischer Verbund zu weiteren Schichten deutlich verbessert werden, sodass ein mechanisch und chemisch adhäsiver Verbund entsteht und jeglicher lateraler Wasserfluss verhindert wird.

Besonders bevorzugt ist es, wenn das LDP als wasserquellendes Methaacrylat ausgebildet ist.

Weitere Vorteile ergeben sich, wenn das Vlies, Geogitter, Wirkgelege und/oder Gewebe der zweiten Verbundschicht aus Kunststoff, insbesondere Polyester oder Polypropylen ausgebildet ist. Diese weisen eine hohe chemische Beständigkeit auf.

Sämtliche Komponenten, Materialien und Bestandteile, die bezüglich der zweiten Verbundschicht genannt und beschrieben sind, können auch in der ersten Verbundschicht einzeln oder in beliebigen Kombinationen enthalten sein.

Eine besonders einfache Herstellung der Flächenabdichtungsbahn kann realisiert werden, wenn die erste und die zweite Verbundschicht gleich ausgebildet sind, d. h. die gleichen Komponenten aufweisen.

Die Dichtungsschicht kann mit der ersten oder der zweiten Verbundschicht verklebt oder thermisch verbunden sein. Beispielsweise können die Verbundschichten thermisch mit der Dichtungsschicht zu einer Einheit zusammengeführt werden. Alternativ ist ein Verkleben, beispielsweise mit geeignetem Kontaktkleber, Hotmelt oder Acrylatkleber, denkbar.

Wenn eine der Verbundschichten SAP aufweist, so kann das SAP in Lösung versetzt werden und als Dispersion aufgetragen werden.

Weitere Merkmale und Vorteile der Erfindung ergeben sich aus der nachfolgenden Beschreibung von Ausführungsbeispielen der Erfindung, anhand der Figur der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine erfindungsgemäße Flächenabdichtungsbahn;
- Fig. 2: eine Anwendung der Flächenabdichtungsbahn;
- Fig. 3: zwei miteinander verbundene Flächenabdichtungsbahnen.

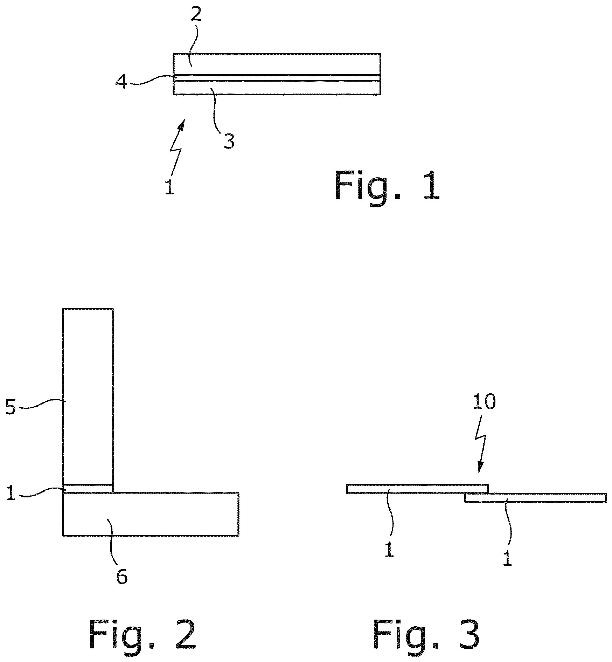

Die Fig. 1 zeigt eine Flächenabdichtungsbahn 1, die eine erste Verbundschicht 2 und eine zweite Verbundschicht 3 aufweist. Zwischen den Verbundschichten 2, 3 ist eine Dichtungsschicht 4 vorgesehen. Die erste Verbundschicht 2 kann ein Vlies und/oder ein Gewebe aufweisen. Auch weitere Komponenten sind denkbar, wie beispielsweise LDP, SAP oder Naturfasern. Die Dichtungsschicht 4 kann als Kunststoffdichtungsbahn, Bitumenbahn oder EPDM-Bahn ausgebildet sein. Die zweite Verbundschicht 3 kann ein Vlies, Geogitter, Wirkgelege und/oder Gewebe aufweisen. Weiterhin kann sie Naturfasern, LDPs und SAPs aufweisen. Das Vlies, Geogitter, Wirkgelege und/oder Gewebe können insbesondere aus Kunststoff ausgebildet sein. Die erste und zweite Verbundschicht 2, 3 können identisch ausgebildet sein.

Die Fig. 2 zeigt, dass die Flächenabdichtungsbahn 1 im Stoßbereich zwischen zwei Bauteilen 5, 6 vorgesehen sein kann. Beispielsweise kann es sich bei dem Bauteil 5 um ein aus Frischbeton hergestelltes Bauteil handeln, während es sich bei dem Bauteil 6 um ein Wärmeverbundsystem handeln kann. Die Flächenabdichtungsbahn 1 sorgt für eine Abdichtung zwischen den Bauteilen 5, 6.

Die Fig. 3 zeigt, dass zwei Flächenabdichtungsbahnen 1 in einem Überlappungsbereich 10 überlappend angeordnet sein können und dort miteinander verbunden, beispielsweise miteinander verklebt sein können. Dabei ist die erste Verbundschicht der rechten Flächenabdichtungsbahn mit der zweiten Verbundschicht der linken Flächenabdichtungsbahn verklebt.

## Patentansprüche

1. Flächenabdichtungsbahn (1) zur Abdichtung von wasserundurchlässigen Betonkonstruktionen mit
a) einer ersten Verbundschicht (2), die ein Vlies und/oder ein Gewebe aufweist,
b) einer Dichtungsschicht (4), die eine Dichtungsbahn aufweist, auf der die erste Verbundschicht (2) angeordnet ist, **gekennzeichnet durch** eine
c) zweite Verbundschicht (3), auf der die Dichtungsschicht (4) angeordnet ist, wobei die zweite Verbundschicht (4) ein Vlies, Geogitter, Wirrgelege und/oder Gewebe aufweist.

2. Flächenabdichtungsbahn nach Anspruch 1, **dadurch gekennzeichnet, dass** die Dichtungsschicht (4) als Kunststoffdichtungsbahn, Bitumenbahn oder Ethylen-Propylen-Dien-(Monomer)-Kautschuk (EPDM)-Bahn ausgebildet ist.

3. Flächenabdichtungsbahn nach Anspruch 2, **dadurch gekennzeichnet, dass** die Dichtungsschicht (4) eine Dicke von mindestens
a) 0,8 mm, vorzugsweise von mindestens 1,2 mm aufweist, wenn sie als Kunststoffdichtungsbahn ausgebildet ist,
b) 0,5 mm, vorzugsweise von mindestens 0,7 mm aufweist, wenn sie als EPDM-Bahn ausgebildet ist,
c) 2 mm, vorzugsweise mindestens 3 mm aufweist, wenn sie aus Bitumen ausgebildet ist.

4. Flächenabdichtungsbahn, nach einem der vorhergehenden Ansprüche 2 oder 3, **dadurch gekennzeichnet, dass** die Kunststoffdichtungsbahn aus Polyvinylchlorid (PVC), thermoplastisches Polymer (TPO), flexiblen Polyolefinen (FPO), Polypropylen (PP Flex), hochdichtem Polyethylen (HDPE) oder thermoplastischem Elastomer (TPE) ausgebildet ist.

5. Flächenabdichtungsbahn nach einem der vorhergehenden Ansprüche, **dadurch gekennzeichnet, dass** die zweite Verbundschicht (3) einen Naturfaserzusatz, insbesondere einen Mineralfaserzusatz oder Steinfaserzusatz, aufweist.

6. Flächenabdichtungsbahn nach einem der vorhergehenden Ansprüche, **dadurch gekennzeichnet, dass** die zweite Verbundschicht (4) ein PP-Vlies aufweist.

7. Flächenabdichtungsbahn nach einem der vorhergehenden Ansprüche, **dadurch gekennzeichnet, dass** die zweite Verbundschicht (4) Liquide-Dispersion-Polymere (LDP) und/oder Super-Absorber-Polymere (SAP) aufweist.

8. Flächenabdichtungsbahn nach Anspruch 7, **dadurch gekennzeichnet, dass** das LDP als wasserquellendes Methaacrylat ausgebildet ist.

9. Flächenabdichtungsbahn nach einem der vorhergehenden Ansprüche, **dadurch gekennzeichnet, dass** Vlies, Geogitter, Wirrgelege und/oder Gewebe der zweiten Verbundschicht (3) aus Kunststoff, insbesondere Polyester oder Polypropylen ausgebildet ist.

10. Flächenabdichtungsbahn nach einem der vorhergehenden Ansprüche, **dadurch gekennzeichnet, dass** die erste und zweite Verbundschicht (2, 3) gleich ausgebildet sind.

11. Flächenabdichtung nach einem der vorhergehenden Ansprüche, **dadurch gekennzeichnet, dass** die Dichtungsschicht (4) mit der ersten und/oder der zweiten Verbundschicht (2, 3) verklebt ist oder thermisch verbunden ist.
